# EUROPEAN PATENT APPLICATION

(11) **EP 1 956 403 A2**
(43) Date of publication of application: **13.08.2008**
(21) Application number: 08151286.5
(22) Date of filing: 11.02.2008
(51) Int. Cl.: G02B 6/30

(54) **Optical Device With Self-Supporting Film Assembly**

(30) Priority: 12.02.2007 US 705358
(71) Applicant: Rohm and Haas Denmark Finance A/S, 2100 Copenhagen (DK)
(72) Inventor: Laney, Thomas M., Spencerport, NY 14559 (US); Betancourt, Esther M., Rochester, NY 14650 (US); Aylward, Peter T., Hilton, NY 14468 (US); Gates, Leonard S., Holley, NY 14470 (US)
(74) Representative: Buckley, Guy Julian

(57) **Abstract**

An optical device comprises a direct backlight and an optical element comprising an arrangement of one or more optical films confined between two integrally bound optically transmissive substrates that together are self-supporting.

## Description

### FIELD OF THE INVENTION

The invention relates to optical displays containing an optical element comprising an arrangement of one or more optical films confined between two integrally bound optically transmissive substrates that together are self-supporting, and more particularly to liquid crystal displays (LCDs) that may be used in LCD monitors and LCD televisions.

### BACKGROUND

Liquid crystal displays (LCDs) are optical displays used in devices such as laptop computers, hand-held calculators, digital watches and televisions. Some LCDs include a light source that is located to the side of the display, with a light guide positioned to guide the light from the light source to the back of the LCD panel. Other LCDs, for example some LCD monitors and LCD televisions (LCD-TVs), are directly illuminated using a number of light sources positioned behind the LCD panel. This arrangement is increasingly common with larger displays, because the light power requirements, to achieve a certain level of display brightness, increase with the square of the display size, whereas the available real estate for locating light sources along the side of the display only increases linearly with display size. In addition, some LCD applications, such as LCD-TVs, require that the display be bright enough to be viewed from a greater distance than other applications, and the viewing angle requirements for LCD-TVs are generally different from those for LCD monitors and hand-held devices.

Some LCD monitors and most LCD-TVs are commonly illuminated from behind by a number of cold cathode fluorescent lamps (CCFLs). These light sources are linear and stretch across the full width of the display, with the result that the back of the display is illuminated by a series of bright stripes separated by darker regions. Such an illumination profile is not desirable, and so a diffuser plate is used to smooth the illumination profile at the back of the LCD device.

Some LCD monitors and most LCD-TVs commonly stack an arrangement of light management films adjacent to the diffuser plate on the opposite side from the lamps. These light management films generally comprise collimating diffuser films, prismatic light directing films, and reflective polarizer films. Handling of these individual light management films to manufacture LCD displays is very labor intensive as each film typically is supplied with protective cover sheets which must be first removed and then each light management film placed in the back light unit of the LCD individually. Also, inventory and tracking of each film individually can add to the total cost to manufacture the LCD display. Further, as these light management films are handled individually there is more risk of damage to the films during the assembly process.

Currently, LCD-TV diffuser plates typically employ a polymeric matrix of polymethyl methacrylate (PMMA) with a variety of dispersed phases that include glass, polystyrene beads, and CaCO₃ particles. These plates often deform or warp after exposure to the elevated humidity and high temperature caused by the lamps. In addition, the diffusion plates require customized extrusion compounding to distribute the diffusing particles uniformly throughout the polymer matrix, which further increases costs.

A previous disclosure, U.S. Pat. Application No. 2006/0082699 describes one approach to reducing the cost of diffusion plates by laminating separate layers of a self-supporting substrate and an optically diffuse film. Although this solution is novel the need to use adhesives to laminate these layers together results in reduced efficiency of the system by adding light absorption materials. Also the additional processing cost to laminate the layers together is self-defeating. Also, this previous disclosure does not teach the materials and structure for an unattached diffuser film. It is desirable to have an unattached diffuser film, which must have dimensional stability as well as high optical transmission while maintaining a high level of light uniformization. Further, it is desirable for such a diffuser to have additional heat insulation value to reduce the heat gain from the light sources to the LC layer above the diffuser. Voiding is a well-known means to achieve both the optical requirements and the insulation requirements of the diffuser. A thin diffuser is also desirable as manufacturers are constantly looking for means to thin the profile of LCD screens. Producing a thin voided film that meets these requirements is very challenging as thin voided films are highly prone to shrinkage under elevated temperatures.

### SUMMARY OF THE INVENTION

The invention provides an optical element and device comprising a direct backlight and an optical element comprising an arrangement of one or more optical films confined between two integrally bound optically transmissive substrates that together are self-supporting. This optical element is useful in replacing the optical function of diffuser plates typically used today in direct backlit LCD displays.

Another embodiment of this invention is an optical element comprising optical diffuser film and at least one other light management film placed between two integrally bound optically transmissive substrates that together are self-supporting. This optical element is useful in replacing the optical function of diffuser plates and light management films typically used today in backlit LCD displays.

Another embodiment of the invention is directed to a liquid crystal display (LCD) unit that has a light source and an LCD panel that includes an upper plate, a lower plate and a liquid crystal layer disposed between the upper and lower plates. The lower plate faces the light source, and includes an absorbing polarizer. An optical element comprising an arrangement of light management films placed between two integrally bound optically transmissive substrates that together are self-supporting is disposed between the light source and the LCD panel so that the light source illuminates the LCD panel through the arrangement of light management films.

The arrangement of light management films can comprise a first polymeric optical diffuser film. The arrangement of light management films optionally comprises other optical layers. Other optical layers may include a bead coated collimating diffuser film, a light directing film and a reflective polarizer.

Therefore, it an object of the present invention to provide an optical element comprising an optical diffuser film placed between two integrally bound optically transmissive substrates that together are self-supporting. The optical element provides the optical smoothing function of previous plate diffusers at a very low cost. The optical diffuser film is unique in that it provides a high level of optical function and meets dimensional stability requirements under specified thermal testing even at low thicknesses. Other embodiments of the invention include other light management films also placed between two integrally bound optically transmissive substrates that together are self-supporting. In another embodiment of the invention one of the optically transmissive substrates is optically diffusing such that no optical diffuser film or a less diffusing optical diffuser film can be placed between the substrates along with other optical films.

The invention provides the desired light smoothing using less materials, less adhesive and less steps than conventional processes while providing improved quality.

### BRIEF DESCRIPTION OF THE DRAWINGS

The invention may be more completely understood in consideration of the following detailed description of various embodiments of the invention in connection with the accompanying drawings, in which:

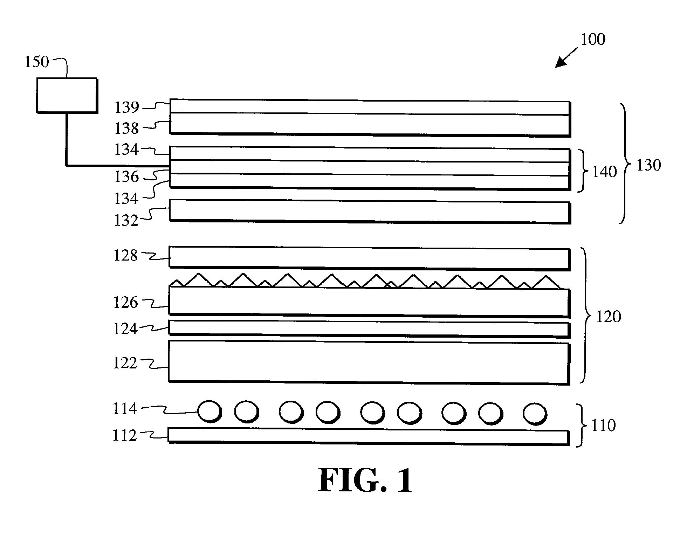

FIG. 1 schematically illustrates a typical back-lit liquid crystal display device that uses a diffuser plate;

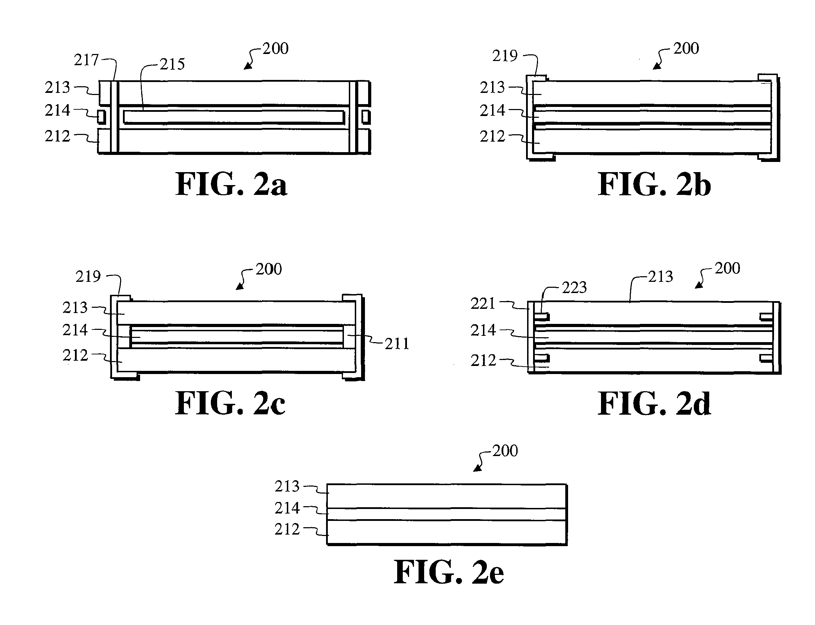

FIG. 2 schematically illustrates an optical element comprising an optical diffuser film placed between two integrally bound optically transmissive substrates that together are self-supporting according to principles of the present invention. Such an optical element capable of replacing the function of the diffuser plate of FIG. 1;

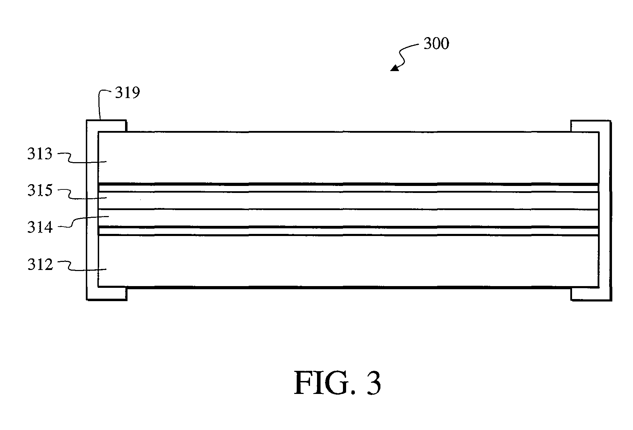

FIG. 3 schematically illustrates an optical element comprising an optical diffuser film and a bead coated collimating diffuser film placed between two integrally bound optically transmissive substrates that together are self-supporting according to principles of the present invention;

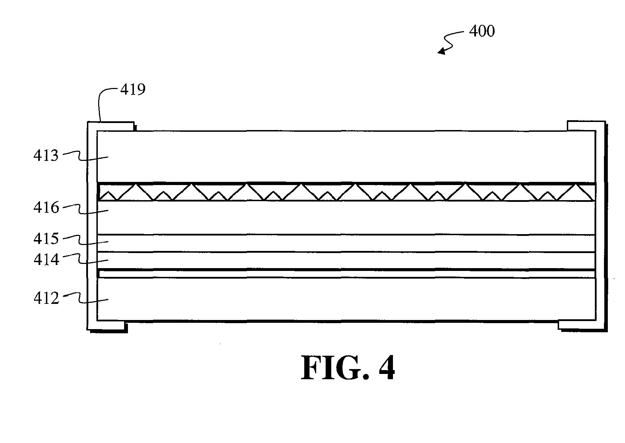

FIG. 4 schematically illustrates an optical element comprising an optical diffuser film, a bead coated collimating diffuser film, and a light directing film placed between two integrally bound optically transmissive substrates that together are self-supporting according to principles of the present invention;

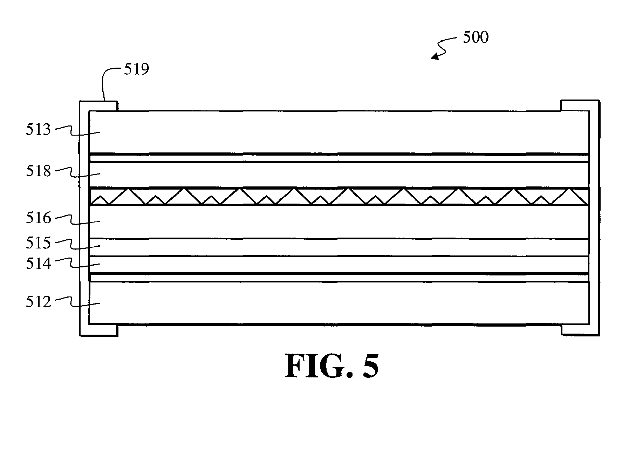

FIG. 5 schematically illustrates an optical element comprising an optical diffuser film, a bead coated collimating diffuser film, a light directing film, and a reflective polarizer film placed between two integrally bound optically transmissive substrates that together are self-supporting according to principles of the present invention;

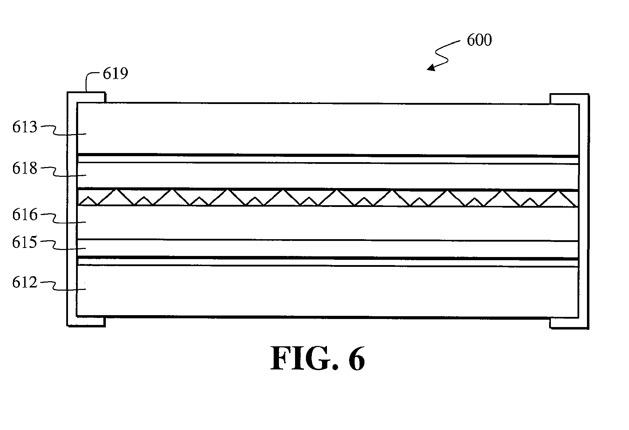

FIG. 6 schematically illustrates an optical element comprising a bead coated collimating diffuser film, a light directing film, and a reflective polarizer film placed between two integrally bound optically transmissive substrates that together are self-supporting wherein the substrate adjacent the bead coated collimating diffuser film is optically diffusing, according to principles of the present invention;

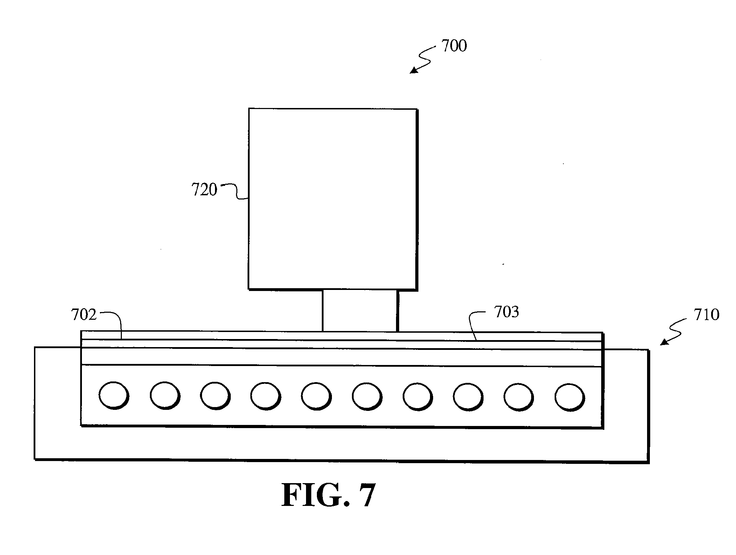

FIG. 7 is a schematic of the testing apparatus.

### DETAILED DESCRIPTION OF THE INVENTION

The present invention is applicable to liquid crystal displays (LCDs, or LC displays), and is particularly applicable to LCDs that are directly illuminated from behind, for example as are used in LCD monitors and LCD televisions (LCD-TVs).

The diffuser plates currently used in LCD-TVs are based on a polymeric matrix, for example polymethyl methacrylate (PMMA), polycarbonate (PC), or cyclo-olefins, formed as a rigid sheet. The sheet contains diffusing particles, for example, organic particles, inorganic particles or voids (bubbles). These plates often deform or warp after exposure to the elevated temperatures of the light sources used to illuminate the display. These plates also are more expensive to manufacture and to assemble in the final display device.

The invention is directed to a directly illuminated LCD device that has an arrangement of light management layers positioned between the LCD panel itself and the light source. The arrangement of light management layers includes two optically transmissive organic or inorganic substrates that together are self-supporting and at least a polymeric optical diffuser film possessing a specific transmission and haze level placed between the substrates, but unattached to said substrates. Optionally other optical films such as bead coated collimating diffuser films, light directing films, and reflective polarizers can be placed between the substrates along with the polymeric optical diffuser film. The transmission and haze levels of each component are designed to provide a direct-lit LC display whose brightness is relatively uniform across the display.

The optically transmissive organic or inorganic substrates of the present invention are simple to manufacture and are commercially available as a commodity item. Preferred polymeric optical diffuser films of the present invention are simple to manufacture and provide a high degree of flexibility in the materials and processes used in manufacturing. In the present invention, the structural and optical requirements are separated: the substrates provide the structural performance and the unattached diffusing film, provides the optical performance. By separating these functions, the cost advantages of using common transparent materials and common diffuser sheets can be exploited, to reduce overall costs. By not attaching the substrate and the diffuser film a high level of optical performance and a low manufacturing cost is realized. This also permits the introduction of warp resistant plates, for example glass or polycarbonate plates, at low cost. In addition, it is easier to control the diffusion properties more precisely when the diffuser is contained in a film rather than a substrate. By using a voided diffuser film a higher level of insulation can be provided at any given thickness of the diffuser. By being unattached, however, it would be desirable if the diffuser meets thermal shrinkage requirements of other optical films in the light management film arrangements used in current systems today. It may not be necessary, however, for the diffuser film or any other optical film placed between the substrates to meet standard thermal shrinkage requirements however, due to the supporting nature of the two substrates.

A schematic exploded view of an exemplary embodiment of a direct-lit LC display device 100 is presented in FIG. 1. Such a display device **100** may be used, for example, in an LCD monitor or LCD-TV. The display device 100 is based on the use of a front panel assembly **130,** comprising a LC panel **140,** which typically comprises a layer of LC **136** disposed between panel plates **134.** The plates **134** are often formed of glass, and may include electrode structures and alignment layers on their inner surfaces for controlling the orientation of the liquid crystals in the LC layer **136.** The electrode structures are commonly arranged so as to define LC panel pixels, areas of the LC layer where the orientation of the liquid crystals can be controlled independently of adjacent areas. A color filter may also be included with one or more of the plates **134** for imposing color on the image displayed.

An upper absorbing polarizer **138** is positioned above the LC layer **136** and a lower absorbing polarizer **132** is positioned below the LC layer **136.** The absorbing polarizers **138, 132** and the LC panel **140** in combination control the transmission of light from the backlight 110 through the display **100** to the viewer. In some LC displays, the absorbing polarizers **138, 132** may be arranged with their transmission axes perpendicular. When a pixel of the LC layer **136** is not activated, it may not change the polarization of light passing there through. Accordingly, light that passes through the lower absorbing polarizer **132** is absorbed by the upper absorbing polarizer **138,** when the absorbing polarizers **138, 132** are aligned perpendicularly. When the pixel is activated, on the other, hand, the polarization of the light passing there through is rotated, so that at least some of the light that is transmitted through the lower absorbing polarizer **132** is also transmitted through the upper absorbing polarizer **138.** Selective activation of the different pixels of the LC layer **136,** for example by a controller **150,** results in the light passing out of the display at certain desired locations, thus forming an image seen by the viewer. The controller may include, for example, a computer or a television controller that receives and displays television images. One or more optional layers **139** may be provided over the upper absorbing polarizer **138,** for example to provide mechanical and/or environmental protection to the display surface. In one exemplary embodiment, the layer **139** may include a hardcoat over the absorbing polarizer **138.**

It will be appreciated that some type of LC displays may operate in a manner different from that described above. For example, the absorbing polarizers may be aligned parallel and the LC panel may rotate the polarization of the light when in an unactivated state. Regardless, the basic structure of such displays remains similar to that described above.

The backlight **110** includes a number of light sources **114** that generate the light that illuminates the LC panel **120.** The light sources **114** used in a LCD-TV or LCD monitor are often linear, cold cathode, fluorescent tubes that extend across the display device **100.** Other types of light sources may be used, however, such as filament or arc lamps, light emitting diodes (LEDs), flat fluorescent panels or external fluorescent lamps. This list of light sources is not intended to be limiting or exhaustive, but only exemplary.

The backlight **110** may also include a reflector **112** for reflecting light propagating downwards from the light sources **114,** in a direction away from the LC panel **140.** The reflector **112** may also be useful for recycling light within the display device **100,** as is explained below. The reflector **112** may be a specular reflector or may be a diffuse reflector. One example of a specular reflector that may be used as the reflector **118** is Vikuiti® Enhanced Specular Reflection (ESR) film available from 3M Company, St. Paul, Minn. Examples of suitable diffuse reflectors include polymers, such as polyethylene terephthalate (PET), polycarbonate (PC), polypropylene, polystyrene and the like, loaded with diffusely reflective particles, such as titanium dioxide, barium sulphate, calcium carbonate and the like.

An arrangement **120** of light management layers is positioned between the backlight **110** and the front panel assembly **130.** The light management layers affect the light propagating from backlight **110** so as to improve the operation of the display device **100 .** For example, the arrangement **120** of light management layers may include a diffuser plate **122.** The diffuser plate **122** is used to diffuse the light received from the light sources, which results in an increase in the uniformity of the illumination light incident on the LC panel **140.** Consequently, this results in an image perceived by the viewer that is more uniformly bright.

The arrangement **120** of light management layers may also include a reflective polarizer **128.** The light sources **114** typically produce unpolarized light but the lower absorbing polarizer **132** only transmits a single polarization state, and so about half of the light generated by the light sources **114** is not transmitted through to the LC layer **136.** The reflecting polarizer **128,** however, may be used to reflect the light that would otherwise be absorbed in the lower absorbing polarizer, and so this light may be recycled by reflection between the reflecting polarizer **128** and the reflector **112.** At least some of the light reflected by the reflecting polarizer **128** may be depolarized, and subsequently returned to the reflecting polarizer **128** in a polarization state that is transmitted through the reflecting polarizer **128** and the lower absorbing polarizer **132** to the LC layer **136.** In this manner, the reflecting polarizer **128** may be used to increase the fraction of light emitted by the light sources **114** that reaches the LC layer **136,** and so the image produced by the display device **100** is brighter.

Any suitable type of reflective polarizer may be used, for example, multilayer optical film (MOF) reflective polarizers; diffusely reflective polarizing film (DRPF), such as continuous/disperse phase polarizers, wire grid reflective polarizers or cholesteric reflective polarizers.

The arrangement **120** of light management layers may also include a light directing film **126.** A light directing film is one that includes a surface structure that redirects off-axis light in a direction closer to the axis of the display. This increases the amount of light propagating on-axis through the LC layer **136,** thus increasing the brightness of the image seen by the viewer. One example is a prismatic light directing film, which has a number of prismatic ridges that redirect the illumination light, through refraction and reflection.

Unlike diffuser plates used in conventional LCD-TVs, the present invention uses an arrangement of light management layers that can have separate structural and diffusing members. Two optically transmissive substrates that together are self-supporting and an unattached voided polymeric optical diffuser film can perform these functions, respectively. Alternatively, two optically transmissive substrates that together are self-supporting wherein one substrate is optically diffuse can also perform these functions. Several exemplary embodiments of the optical element of the present invention are schematically illustrated in FIG. 2. The figure shows the same light management layers with five different means to attach the two optically transmissive substrates to each other, labeled a thru e. The arrangement of light management layers **200** includes a first optically transmissive substrate **212** and a polymeric optical diffuser film **214** adjacent to but un-attached to the substrate. A second optically transmissive substrate **213** is adjacent to the polymeric optical diffuser film **214** on the opposing side as the first optically transmissive substrate **212.** Other optical films can also be added to the arrangement of light management layers above the polymeric optical diffuser film **214** and below substrate **213** as will be illustrated in subsequent Figures. Figure 2a shows one means by which the substrates **212** and **213** are attached to each other. A pin **217** can be fit into a holes formed in both substrates **212** and **213.** The pins can be placed around the perimeter of the optical element. The pins can either be press fit into the holes of the substrates or adhered to the substrates using adhesive, or both. A hole or slot **215** in the optical diffuser film **214** is also provided for the pin to pass thru the optical diffuser film. The hole or slot **215** would preferably be somewhat oversized to allow the optical diffuser film to expand or shrink at different rates as the substrate upon various temperature and humidity conditions. Figure 2b shows another means by which the substrates **212** and **213** are attached to each other. Edge binding clips **219** are used similar to that of plastic notebooks with plastic binding clips. These clips can be adhered to the substrates with the use of adhesive. The inside face of the binding clip which is adjacent the edges of the optically transmissive substrates can be a highly reflective material to prevent light loss via light piping in the substrates. Figure 2c also shows the use of edge binding clips **219.** In this case the clips exert a squeezing force to the substrates which are kept spaced apart via a spacer **211.** The squeezing force of the clips on the substrates and on the spacer integrally bind the substrates and spacers via frictional forces between the clips and the substrates. Figure 2d shows the use of edge substrates **221** that are fastened to each of the two optically transmissive substrates **212** and **213** via pins **223.** These pins **223** are either press fit into holes in the edge substrate **221** and the substrates **212** and **213** or fixed with adhesive or both. The inside face of the edge substrates which are adjacent the edges of the optically transmissive substrates can be a highly reflective material to prevent light loss via light piping in the substrates. Figure 2e illustrates the substrates **212** and **213** along with optical diffuser film **214** being held together via electrostatic forces. No separate clip or substrate is required as electrostatic forces between the layers hold the layers together. This can be accomplished by subjecting one side of the arrangement of light management layers to a very high positive voltage while applying a very high negative voltage to the opposite side.

The substrates **212** and **213** are sheets of material that together are self-supporting, and are used to provide support to the layers between them in the light management arrangement. As used herein, "Self-Supporting" is thus defined as bending insignificantly (less than 1/180 of its longest dimension) under its own weight even with the additional weight of other layers in the arrangement. One or both of the optically transmissive substrates may be self-supporting on there own. The substrates **212** and **213** may be, for example, up to a few mm in combined thickness, depending on the size of the display. Typically the substrates are each between 0.25 and 4 mm thick. Preferably, they are each between 0.75 and 1.25 mm thick. One or both of the optically transmissive substrates may be self-supporting on their own.

The substrates **212** and **213** may be made of any material that is substantially transparent to visible light, for example, organic or inorganic materials, including glasses and polymers. Suitable glasses include float glasses, i.e. glasses made using a float process, or LCD quality glasses, referred as LCD glass, whose characteristic properties, such as thickness and purity, are better controlled than float glass. One approach to forming LCD glass is to form the glass between rollers.

The substrates **212** and **213,** the diffuser film **214,** and one or more other light management layers may be included in a light management arrangement disposed between the backlight and the LCD panel. The substrates **212** and **213** provide a stable structure for supporting the light management arrangement in a unitary optical element. The substrates **212** and **213** are less prone to warping than conventional diffuser plate systems, particularly if the substrates **212** and **213** are formed of a warp-resistant material such as glass.

Suitable polymer materials used to make the substrates **212** and **213** may be amorphous or semi-crystalline, and may include homopolymer, copolymer or blends thereof. Example polymer materials include, but are not limited to, amorphous polymers such as poly(carbonate) (PC); poly(styrene) (PS); acrylates, for example acrylic sheets as supplied under the ACRYLITE® brand by Cyro Industries, Rockaway, N.J.; acrylic copolymers such as isooctyl acrylate/acrylic acid; poly(methylmethacrylate) (PMMA); PMMA copolymers; cycloolefins; cylcoolefin copolymers; acrylonitrile butadiene styrene (ABS); styrene acrylonitrile copolymers (SAN); epoxies; poly(vinylcyclohexane); PMMA/poly(vinylfluoride) blends; atactic poly(propylene); poly(phenylene oxide) alloys; styrenic block copolymers; polyimide; polysulfone; poly(vinyl chloride); poly(dimethyl siloxane) (PDMS); polyurethanes; poly(carbonate)/aliphatic PET blends; and semicrystalline polymers such as poly(ethylene); poly(propylene); poly(ethylene terephthalate) (PET); poly(ethylene naphthalate)(PEN); polyamide; ionomers; vinyl acetate/polyethylene copolymers; cellulose acetate; cellulose acetate butyrate; fluoropolymers; poly(styrene)-poly(ethylene) copolymers; and PET and PEN copolymers.

Exemplary embodiments of the polymeric optical diffuser film **214** include a semi-crystalline polymer matrix containing voids and void initiating particles. A semi-crystalline polymer matrix is preferred as it may be substantially transparent to visible light, can be readily stretch voided, and can possess dimensional stability having a shrinkage of less than 1.0% after being tested at elevated temperatures up to 85C. Preferable polymers to meet all these criteria are polyesters and their copolymers. Most preferred are poly(ethylene terephthalate) (PET); poly(ethylene naphthalate)(PEN)polyesters and any of their copolymers. PET is most suitable as it is much lower in cost than PEN. FIG. 7 shows the light transmission of several commercially available PET resins. Transmission is measured per method ASTM D-1003. Some grades have a transmission below 90.5%. It is preferred that PET grades with optical transmissions above 90.5% are used to limit the amount of light absorption by the diffuser film.

The void initiating particles may be any type of particle that is incompatible with the matrix polymer. These particles can be inorganic or organic. Inorganic particles can include any of calcium carbonate, barium sulfate, titanium dioxide, or any other inorganic compound that can be melt blended into a polymer. Typical organic void initiating particles are polymers that are immiscible with the matrix polymer. These are preferred as resin pellets of these immiscible polymers can be simply dry blended with the resin pellets of the matrix polymer and extruded together to form a cast film. Inorganic particles require a pre-mixing or melt compounding, which adds processing cost. Preferred organic void initiating particles are polyolefins. Most preferred is polypropylene. The void initiating particles should be added so as to produce enough diffusivity to function as a diffuser yet not be so opaque that the optical luminance of the LCD display is significantly reduced. Preferred loadings of the void initiating particles are 3 to 25 wt % of the entire film. The most preferred loadings are 10 to 20 wt%.

The polymeric optical diffuser **214** is preferably produced by a process of dry blending the matrix polymer and an immiscible polymer additive. Blending may be accomplished by mixing finely divided, e.g. powdered or granular, matrix polymer and polymeric additive and, thoroughly mixing them together, e.g. by tumbling them. The resulting mixture is then fed to the film forming extruder. Blended matrix polymer and immiscible polymeric additive which has been extruded and, e.g. reduced to a granulated form, can be successfully re-extruded into a voided polymeric optical diffuser. It is thus possible to re-feed scrap film, e.g. as edge trimmings, through the process. Alternatively, blending may be effected by combining melt streams of matrix polymer and the immiscible polymer additive just prior to extrusion. If the polymeric additive is added to the polymerization vessel in which the matrix polymer is produced, it has been found that voiding and hence diffusivity is not developed during stretching. This is thought to be on account of some form of chemical or physical bonding which may arise between the additive and matrix polymer during thermal processing.

The extrusion, quenching and stretching of the voided polymeric optical diffuser film may be effected by any process which is known in the art for producing oriented film, e.g. by a flat film process or a bubble or tubular process. The flat film process is preferred for making voided polymeric optical diffuser according to this invention and involves extruding the blend through a slit die and rapidly quenching the extruded web upon a chilled casting drum so that the matrix polymer component of the film is quenched into the amorphous state. The film base is then biaxially oriented by stretching in mutually perpendicular directions at a temperature above the glass-rubber transition temperature of the matrix polymer. Generally the film is stretched in one direction first and then in the second direction although stretching may be effected in both directions simultaneously if desired. In a typical process the film is stretched firstly in the direction of extrusion over a set of rotating rollers or between two pairs of nip rollers and is then stretched in the direction transverse thereto by means of a tenter apparatus. The film may be stretched in each direction to 2.5 to 5.0 times its original dimension in each direction of stretching. Upon stretching voids initiate around the void initiating particles. The higher the concentration of void initiating particle the higher the degree of void volume that is produced. The final stretched thickness of the film is preferably in the 1.0 to 10.0 mil thickness range. The most preferred thickness range is between 2.0 and 6.0 mils. This is significantly thinner than the optically transmissive self-supporting substrate and together their total thickness can be maintained in the range of that of the currently used plate diffusers.

After the film has been stretched and a voided polymeric optical diffuser film formed, it is heat set by heating to a temperature sufficient to crystallize the matrix polymer whilst restraining the voided polymeric optical diffuser against retraction in both directions of stretching. This process enables the film to meet shrinkage requirements of less than 1.0% when tested at temperatures up to 85C. The voiding tends to collapse as the heat setting temperature is increased and the degree of collapse increases as the temperature increases. Hence specular light transmission increases with an increase in heat setting temperatures. Whilst heat setting temperatures up to about 230 C can be used without destroying the voids, temperatures between 150 C and 200 C generally result in a greater degree of voiding and more efficient duffusivity, as well as result in low shrinkage after thermal testing.

The polymeric optical diffuser film **214** may also include a whitener. Typically whiteners are added at levels much lower than void initiators and thus do not contribute to voiding but do improve whiteness and to some extent diffusivity of the film. Whiteners are typically inorganic compounds, TiO2 being most preferred. These optical brighteners can be added to the film during the resin blending process and can be added via master batch pellets at the appropriate ratio. The appropriate ratio is that that would let down the concentration of the master batch pellet with the rest of the matrix resin and void initiating resin to a concentration preferably between 0.25 and 5.0 wt%.

The polymeric optical diffuser film **214** may also include optical brighteners that convert UV light into visible light. Such optical brighteners must be chosen from those which are thermally stable and can survive the extrusion temperatures used to fabricate the voided polymeric optical diffuser film. Preferred optical brighteners comprise benzoxazolyll-stilbene compounds. The most preferred optical brightener comprises 2,2'-(1,2-ethenediyldi-4,1-phenylene)bisbenzoxazole. These optical brighteners can be added to the film during the resin blending process and can be added via master batch pellets at the appropriate ratio. The appropriate ratio is that that would let down the concentration of the master batch pellet with the rest of the matrix resin and void initiating resin to a concentration preferably between 0.01 and 0.1 wt%. In the most preferred embodiment the optical brightener will be added to attain a concentration between 0.02 and 0.05%wt.

The polymeric optical diffuser film **214** may also include an antistatic coating to prevent dirt attraction. Anyone of the known antistatic coatings could be employed.

The polymeric optical diffuser film **214** may also be fabricated as a multilayered or coextruded film. Advantages of doing so would be to enable the use of a very thin film yet still meet both optical and thermal stability or shrinkage requirements. Thin films require high loadings of void initiator and thus high voiding to achieve the optical diffusion performance of a plate diffuser. At these high levels of voiding the film is much less dimensionally stable at elevated temperatures. By creating a film with a non-voided layer adjacent to one or both sides of a voided layer the dimensional stability at elevated temperatures can be improved. Such multilayered films are produced the same as previously discussed except a second extruder is used to melt and pump neat matrix polymer. This neat polymer extrusion flow is delivered along with the voided layer extrusion flow, previously described, into a co-extrusion die assembly. A multilayered cast film is then produced with a layer of neat polymer on one or both sides of the voided layer. This cast film is then quenched and stretched as previously discussed.

The optically transmissive substrates **212, 213** or the optical diffuser film **214** may be provided with protection from ultraviolet (UV) light, for example by including UV absorbing material or material in one of the layers that is resistant to the effects of UV light. Suitable UV absorbing compounds are available commercially, including, e. g., Cyasorb® UV-1164, available from Cytec Technology Corporation of Wilmington, Del., and Tinuvin® 1577, available from Ciba Specialty Chemicals of Tarrytown, N.Y.

Other materials may be included in the optically transmissive substrate **212, 213** or the optical diffuser film **214** to reduce the adverse effects of UV light. One example of such a material is a hindered amine light stabilizing composition (HALS). Generally, the most useful HALS are those derived from a tetramethyl piperidine, and those that can be considered polymeric tertiary amines. Suitable HALS compositions are available commercially, for example, under the "Tinuvin" tradename from Ciba Specialty Chemicals Corporation of Tarrytown, N.Y. One such useful HALS composition is Tinuvin 622.

Another exemplary embodiment of the present invention is schematically illustrated in Fig. 3. The arrangement of light management layers **300** includes optically transmissive substrates **312** and **313,** which together are self-supportive, and an optical diffuser film **314** placed between the substrates adjacent to but un-attached to substrate **312.** A bead coated collimation diffuser film **315** is also placed between the optically transmissive substrates **312** and **313** adjacent to the optical diffuser film **314.** In this embodiment the optically transmissive substrates **312** and **313** are integrally bound by an edge binding clip **319.**

Another exemplary embodiment of the present invention is schematically illustrated in Fig. 4. The arrangement of light management layers **400** includes optically transmissive substrates **412** and **413,** which together are self-supportive, and an optical diffuser film **414** placed between the substrates adjacent to but un-attached to substrate **412.** A bead coated collimation diffuser film **415** is also placed between the optically transmissive substrates **412** and **413** adjacent to the optical diffuser film **414.** A prismatic light directing film **416** is also placed between the optically transmissive substrates **412** and **413** adjacent to the bead coated collimation diffuser film **415.** In this embodiment the optically transmissive substrates **412** and **413** are integrally bound by an edge binding clip **419.**

Another exemplary embodiment of the present invention is schematically illustrated in Fig. 5. The arrangement of light management layers 500 includes optically transmissive substrates **512** and **513,** which together are self-supportive, and an optical diffuser film **514** placed between the substrates adjacent to but un-attached to substrate **512.** A bead coated collimation diffuser film **515** is also placed between the optically transmissive substrates **512** and **513** adjacent to the optical diffuser film **514.** A prismatic light directing film **516** is also placed between the optically transmissive substrates **512** and **513** adjacent to the bead coated collimation diffuser film **515.** A reflective polarizer film **518** is also placed between the optically transmissive substrates **512** and **513** adjacent to the prismatic light directing film **516.** In this embodiment the optically transmissive substrates **512** and **513** are integrally bound by an edge binding clip **519.**

Another exemplary embodiment of the present invention is schematically illustrated in Fig. 6. The arrangement of light management layers **600** includes optically transmissive substrates **612** and **613,** which together are self-supportive. The optically transmissive substrates **612** which would be adjacent to the light source in a LCD display is further light diffusing, similar to the diffuser plates of conventional light management layer arrangements. In this embodiment the optically transmissive substrates **612** and **613** are integrally bound by an edge binding clip **619.** A bead coated collimation diffuser film **615** is also placed between the optically transmissive substrates **612** and **613** adjacent to the optically transmissive substrates **612.** A prismatic light directing film **616** is also placed between the optically transmissive substrates **612** and **613** adjacent to the bead coated collimation diffuser film **615.** A reflective polarizer film **618** is also placed between the optically transmissive substrates **612** and **613** adjacent to the prismatic light directing film **616.**

In any of the embodiments where more than one optical film is placed between the optically transmissive substrates(as in FIG's 3 thru 6) typically none of the optical films are adhered to each other. There may be benefit for two optical films to be adhered to each other from a cost of manufacturing standpoint but typically one or more of the optical films are not adhered to each other.

### EXAMPLES

Various samples of films confined between two integrally bound optically transmissive substrates that together are self-supporting were prepared and their performance was compared to a diffuser plate in combination with similar optical films used in a commercially available LCD-TV. Voided polymeric optical diffuser films between optically transmissive PMMA substrates were tested for brightness and optical uniformity. Similar optical elements with additional optical films were also tested. A comparative sample whereby the optical films were laminated together was tested as well. The relative stiffness of these inventive examples were compared to that of the conventional plate diffuser as well.

### Sample EX-1

A unitary light management arrangement was made by placing a unique voided polymeric diffuser film along with a bead coated collimating diffuser film, a light directing film, and a reflective polarizer film between two optically transmissive substrates that were together self supporting.

To make the voided polymeric diffuser film PET(#7352 from Eastman Chemicals) was dry blended with Polypropylene("PP", Huntsman P4G2Z-159) at 22% by weight and with a 1 part PET to 1 part TiO2 concentrate (PET 9663 E0002 from Eastman Chemicals) at 1.7% by weight. This blend was then dried in a desiccant dryer at 6°C for 12 hours.

Cast sheets were extruded using a 2-1/2" extruder to extrude the PET/PP/TiO2 blend. The 275°C meltstream was fed into a 7 inch film extrusion die also heated at 275°C. As the extruded sheet emerged from the die, it was cast onto a quenching roll set at 55°C. The PP in the PET matrix dispersed into globules between 10 and 30 um in size during extrusion. The final dimensions of the continuous cast sheet were 18 cm wide and 305 um thick. The cast sheet was then stretched at 110 C first 3.2 times in the X-direction and then 3.4 times in the Y-direction. The stretched sheet was then Heat Set at 150°C.

During stretching voids were initiated around the particles of PP that were dispersed in the cast sheet. These voids grew during stretching and resulted in significant void volume. The final thickness of the film was 52 um.

The bead coated collimating diffuser film used was the type provided in an Aquos 20" DBL TV by Sharp Electronics Corporation.

The light directing film used was a commercially available film, E225 Light Directing Film from the Eastman Kodak Company.

The reflective polarizer film used was a commercially available film, DBEF-D Reflective Polarizer film from 3M.

The two optically transmissive substrates that were together self supporting were commercial PMMA sheet material, 1/16" thick Acrylite® Acrylic plastic sheet.

The unitary light management arrangement was made by first cutting the two PMMA sheets to the same size as the existing plate diffuser in an Aquos 20" DBL TV by Sharp Electronics Corporation. 8 holes were drilled around the perimeter of the sheets evenly spaced. The holes were approximately 1/8" in diameter and allowed for a press fit of a steel pin. Steel pins were pressed into the first PMMA sheet flush with one side of the sheet and protruding approximately ¼" from the other side. Then a sheet of the previously described voided polymeric diffuser film was cut to the same size as the PMMA sheets. Oversized holes were drilled in the sheet in the same pattern as the pins and the sheet was placed over the extended pin of the first sheet. This same process was then done with the bead coated collimating diffuser film such that the film laid adjacent to the voided polymeric diffuser film. This same process was then done with the light directing film such that the film laid adjacent to the bead coated collimating diffuser film. This same process was then done with the reflective polarizer film such that the film laid adjacent to the light directing film. Then the second PMMA sheet was pressed onto the extended pins such that the PMMA sheets fomed a sandwich around the stack of light management films.

### Sample EX-2

Another unitary light management arrangement was made in a similar fashion to EX-1 except instead of using pressed fit pins to secure the PMMA sheets together Edge binding clips were employed.

### Control Sample C1

This comparative sample was the light management arrangement provided in an Aquos 20" DBL TV by Sharp Electronics Corporation. This light management arrangement consisted of a 2.03 mm thick native plate diffuser supplied in the commercial TV with the same light management films as described in EX-1 with the exception of the voided polymeric diffuser film, stacked on of the plate diffuser in the same order of arrangement.

### Control Sample C2

This comparative sample was a light management arrangement in which a single 1/16" Acrylite® Acrylic plastic sheet was used as an optically transmissive self supporting substrate and most of the optical films were laminated to it. The 1/16" plastic sheet was first cut to the size of the plate diffuser in a Aquos 20" DBL TV by Sharp Electronics Corporation. Then, using a clear adhesive transfer tape, the voided polymeric diffuser film as that described in EX-1 was laminated to the 1/16" sheet. The tape used was a 50 µm thick tape No. 8142 by 3M^{™}. The tape was applied to the sheet and then the diffuser film was applied to the tape. This same procedure was then used to laminate the bead coated collimating diffuser film of EX-1 to the voided polymeric diffuser film. Then again this same procedure was used to laminate the light directing film of EX-1 to the bead coated collimating diffuser film. The reflective polarizer film of EX-1 was then stacked onto the light directing film without being laminated.

The measurement of brightness comprised an on-axis luminance measurement. This measurement for examples EX-1 and EX-2 and control samples C1 and C2 were performed on a specially designed LCD-TV experimental test bed. The test bed apparatus **700,** illustrated schematically in FIG. 7 used a commercial backlight unit **710** to mount and illuminate the samples. Either a diffuser plate **702** with optical films stacked on top **703,** or a light management arrangement as described by the samples above **702** was placed in the backlight. The samples were then measured optically using the measuring device **720.** A description of the back light unit and the measuring device follows:

### Back Light Unit:

### Aquos 20" DBL TV by Sharp Electronics Corporation (710 in Figure 7).

### 10 CCFL's

With Diffuser Plate and optical films **(702** and **703,** respectively in Figure 7) (the various light management arrangements as described by the samples were used in place of the Plate Diffuser and optical films when measuring inventive or other comparative samples glass, **702** in Figure 7.)

### Measuring Equipment:

### 1.) ELDIM 160R EZ Contrast conscope - 2mm spot size with a 1.2 mm distance from sample.(720 in Figure 7)

The ELDIM 160R EZ Contrast conscope was used to determine the on-axis luminance emitting from the diffuser plate or from the light management arrangements. On-axis luminance is the intensity of light emitting normal to the diffuser plate or diffuser film surface. Data was reported as the luminance in candela per square meter (cd/m²).

A measurement of stiffness was done on each of the comparative and inventive samples to evaluate the relative self supporting function of each. The procedure as described in ASTM D790, Flexural Properties of Plastics and Electrical Insulating Materials, Method I 3 Point Center Loading was used.
- Test Speed: 0.25 inches per minute
- Post Separation: 3.5 inches
Apply a load using a constant speed test device capable of measuring the displacement and the applied load. Using the two, displacement and load, determine the stiffness (force/displacement; slope of the graph) for each package configuration (layer order of light management sheets).

The on-axis brightness and the stiffness along with the number of individual films or sheets (assemblies) that each light management arrangement contained are shown in Table 1.

**TABLE 1**

| Sample | Description | On-axis Luminance (cd/m²) | Stiffness (Ibs/in) | Number of Assemblies |
|---|---|---|---|---|
| EX-1 | Invention / pinned | 3450 | 211 | 1 |
| EX-2 | Invention / Binder clip | 3450 | 214 | 1 |
| C1 | Current film Stack | 3850 | 193 | 4 |
| C2 | Laminated film stack | 2500 | 101 | 2 |

It can be seen in Table 1 that both EX-1 and Ex-2 have on-axis brightness levels similar to the current film stack up in the TV used to evaluate the light management arrangements. The somewhat lower luminance values could be increase by creating a voided polymeric diffuser film that is somewhat less diffusing(thinner or less voided). Both the inventive example have far superior on-axis luminance as the laminated comparative sample C2, likely due to the added absorbance of the adhesive layers as well as the lack of an air interface between the bead coated collimating diffuser film and the light directing film.

The stiffness of Ex-1 and EX-2 are both higher than the existing light management arrangement C1 as well as the Laminated arrangement C2.

The intended advantage of the inventive examples being a unitary assembly versus multiple assemblies for the comparative examples is evident. Thus it is clear to see that the present invention provides a light management arrangement that offers ease of manufacturing with associated cost savings while maintaining the levels of on-axis brightness and stiffness as required by commercial LCD TV's.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives falling within the spirit and scope of the invention as defined by the claims.

The entire contents of the patents and other publications referred to in this specification are incorporated herein by reference.

### PARTS LIST

- 100: direct-lit LC display device
- 110: backlight
- 112: reflector
- 114: light sources
- 118: reflector
- 120: light management layers
- 122: diffuser plate
- 124: collimating diffuser film
- 126: light directing film
- 128: reflective polarizer
- 130: front LC panel assembly
- 132: lower absorbing polarizer
- 134: panel plates
- 136: LC layer
- 138: upper absorbing polarizer
- 139: optional layer(s)
- 140: LC panel
- 150: controller
- 200: light management layers
- 211: spacer
- 212: first optically transmissive substrate
- 213: second optically transmissive substrate
- 214: polymeric optical diffuser film
- 215: bead coated light collimation film
- 217: pin
- 219: edge binding clip
- 221: edge substrate
- 223: pin
- 300: light management layers
- 312: first optically transmissive substrate
- 313: second optically transmissive substrate

- 314: polymeric optical diffuser film
- 315: collimating film
- 319: edge binding clip
- 400: light management layers
- 412: first optically transmissive substrate
- 413: second optically transmissive substrate
- 414: polymeric optical diffuser film
- 415: collimating diffuser film
- 416: prismatic light directing film
- 419: edge binding clip
- 500: light management layers
- 512: first optically transmissive substrate
- 513: second optically transmissive substrate
- 514: polymeric optical diffuser film
- 515: collimating diffuser film
- 516: prismatic light directing film
- 518: reflective polarizer film
- 519: edge binding clip
- 600: light management layers
- 612: first optically transmissive substrate
- 613: second optically transmissive substrate
- 615: collimating diffuser film
- 616: prismatic light directing film
- 618: reflective polarizer film
- 619: edge binding clip
- 700: test bed apparatus
- 702: diffuser plate or film
- 703: film stack
- 710: backlight unit
- 720: measuring device

## Claims

1. An optical device comprising a direct backlight and an optical element comprising an arrangement of one or more optical films confined between two integrally bound optically transmissive substrates that together are self-supporting.

2. The optical device of claim 1 wherein the optically transmissive substrate adjacent to the direct backlight is also optically diffusing.

3. The optical device of claim 1 wherein at least one of the substrates is self-supporting by itself.

4. The optical device of claim 1 wherein the substrates comprise a polymer.

5. The optical device of claim 1 wherein the substrates comprise an acrylic, polycarbonate, or cyclo-olefin polymer or copolymer.

6. The optical device of claim 1 wherein the substrates are between 0.25 mm and 4.0 mm thick.

7. The optical device of claim 1 wherein the substrates are between 0.75 mm and 1.25 mm thick.

8. The optical device of claim 1 wherein the one or more optical films are not adhered to each other.

9. The optical device of claim 1 wherein none of the optical films are adhered to each other.

10. The optical device of claim 1 wherein the two substrates are integrally bound by the use of pins protruding through the substrates and optical films normal to their face surfaces and which are fixed via press fit or adhesive to the substrates but not fixed to the optical films and are located around the periphery of the optical element.

11. The optical device of claim 1 wherein the two substrates are integrally bound by the use of edge binding clips.

12. The optical device of claim 11 wherein spacers are located between the two substrates located around the outside perimeter of the substrates outside of the area where the optical film is located.

13. The optical device of claim 1 wherein the two substrates are integrally bound by the use of edge substrates, the face or surface side of which are located against the optical transmissive substrate's edges and are fixed to the optical transmissive substrates by either pins, adhesive, or both.

14. The optical device of claim 11 wherein the inside face of the edge clip comprises a highly reflective layer and is optically coupled to the edges of the optically transmissive substrates.

15. The optical device of claim 13 wherein the face of the edge substrates adjacent to the edges of the optically transmissive substrates comprise highly reflective layers and are optically coupled to the edges of the optically transmissive substrates.

16. The optical device of claim 1 wherein a polymeric optical diffuser film is confined between the optically transmissive substrates.

17. The optical device of claim 16 wherein the polymeric optical diffuser film is voided.

18. The optical device of claim 16 wherein the polymeric optical diffuser film comprises optical brightener.

19. The optical device of claim 16 wherein a bead coated collimation diffuser film is also confined between the optically transmissive substrates adjacent to the polymeric optical diffuser film.

20. The optical device of claim 19 wherein a light directing film is also confined between the optically transmissive substrates adjacent to the bead coated diffuser film on the opposing side as that of the polymeric optical diffuser film.

21. The optical device of claim 20 wherein a reflective polarizer film is also confined between the optically transmissive substrates adjacent to the light directing film on the opposing side as that of the bead coated diffuser film.

22. An optical element comprising an arrangement of one or more optical films confined between two integrally bound optically transmissive substrates that together are self-supporting.

23. A process for managing light for an optical device comprising providing the light and passing the light through the light management layers as described in claim 1.

24. A display comprising the device of claim 1.

25. The display of claim 24 including a liquid crystal cell.
